# EUROPEAN PATENT APPLICATION

(11) **EP 4 220 038 A1**
(43) Date of publication of application: **02.08.2023**
(21) Application number: 23163087.2
(22) Date of filing: 21.03.2022
(51) Int. Cl.: F25B 41/325, F25B 41/35, F16K 1/38, F16K 1/54

(54) **CONTROL VALVE**

(30) Priority: 22.03.2021 JP 2021047608
(62) Divisional of application: 22163335.7
(71) Applicant: TGK CO., Ltd., Tokyo 193-0942 (JP)
(72) Inventor: MIURA, Youichi, Tokyo, 193-0942 (JP); YUASA, Tomohiro, Tokyo, 193-0942 (JP)
(74) Representative: Schröer, Gernot H.

(57) **Abstract**

A control valve (1) comprising:
a body (10) including an inlet port (18) through which fluid is introduced, an outlet port (20) through which the fluid is delivered, a valve hole (30, 530) through which the inlet port (18) and the outlet port (20) communicate with each other, and a valve seat (32) located in the valve hole (30, 530);
a valve element (40, 540) that touches and leave the valve seat (32), in particular from a downstream side, to close and open a valve section; a spring (58) that biases the valve element (40, 540) in a valve closing direction; and
an actuator (8) that drives the valve element (40, 540) in opening and closing directions of the valve section, wherein
a rubber (162) is provided on at least one of a face of the valve element (40, 540) and a face of the valve seat (32, 532) that come in contact with each other.

## Description

The present invention relates to a control valve and, in particular, to a structure for opening and closing a valve section.

An automotive air conditioner typically includes a compressor, a condenser, an expander, an evaporator, and so forth arranged in a refrigeration cycle. In refrigeration cycles, various control valves for controlling the flow of fluid, such as expansion valves serving as expanders, are used. With recent increase in electric vehicles, motor operated valves including motors as driving units have been increasingly widely employed.

A motor operated valve includes a shaft arranged coaxially with a rotor, a valve element that is movable integrally with the shaft, and a feed screw mechanism that converts rotational movement of the rotor into translational movement of the shaft. The rotation of the rotor moves the valve element in opening and closing directions of a valve section. An example of such a motor operated valve has a structure in which an appropriate valve closing load is applied to the valve element in a valve closed state (refer to JP 2020-041596 A, for example). This achieves good valve closing performance.

### Related Art List

(1) JP 2020-041596 A

In the motor operated valve of JP 2020-041596 A, however, as will be described later, the pressure receiving diameter of the valve element changes at the start of valve opening, which increases the valve closing load. This valve closing load may act as resistance to valve opening and increase rotational torque of the motor. The motor operated valve thus leaves room for improvement in that the motor load increases at valve opening. Such a problem is not limited to motor operated valves used in refrigeration cycles, but is similarly applicable control valves in which the valve closing load increases at valve opening.

An object of the present invention is to provide a structure for reducing the load on an actuator during opening of a control valve.

A control valve according to an embodiment of the present invention includes: a body including an inlet port through which fluid is introduced, an outlet port through which the fluid is delivered, a valve hole through which the inlet port and the outlet port communicate with each other, and a valve seat located in the valve hole; a valve element that touches and leave the valve seat, in particular from a downstream side, to close and open a valve section; a spring that biases the valve element in a valve closing direction; an actuator that drives the valve element in opening and closing directions of the valve section. A rubber is provided on at least one of a face of the valve element and a face of the valve seat that come in contact with each other.

According to the embodiment, the rubber is provided to cover the position at which the valve element and the valve seat come in contact with each other. Thus, the rubber is moderately deformed when the valve is closed, which improves the sealing property of the valve section. Necessary valve closing performance can therefore be achieved without making the load on the actuator particularly higher. Consequently, the load on the actuator is reduced.
FIG. 1 is a cross-sectional view of a motor operated valve according to an embodiment;
FIG. 2 is an enlarged view of part A in FIG. 1;
FIGS. 3A and 3B illustrate a structure of an internal passage of a first valve element;
FIGS. 4A and 4B are enlarged views of main parts around the first valve element;
FIGS. 5A to 5C illustrate processes of the operation of the motor operated valve;
FIGS. 6A and 6B are partially enlarged views illustrating a structure for reducing sliding resistance with a seal ring;
FIGS. 7A to 7D illustrate the operation of reducing a pressure difference by a structure of a first valve;
FIGS. 8A to 8D illustrate the operation of reducing a pressure difference by a structure of the first valve;
FIG. 9 is a graph showing the variation of load in the valve opening direction applied to the first valve element by valve opening operation;
FIGS. 10A to 10C are partially enlarged views illustrating structures of seal rings according to modifications;
FIGS. 11A and 11B are partially enlarged views illustrating structures of seal rings according to other modifications;
FIGS. 12A and 12B illustrate results of analysis of deformation of seal rings caused by a pressure difference;
FIGS. 13A and 13B are partially enlarged views illustrating a seal structure according to another modification; and
FIGS. 14A and 14B are partially enlarged views illustrating a structure of the first valve according to another modification.

An embodiment of the invention will now be described. The description is not intended to limit the scope of the present invention, but to exemplify the invention.

The embodiment of the present invention will now be described in detail with reference to the drawings. In the description below, for convenience of description, the positional relationship in each structure may be expressed with reference to how the structure is depicted in the drawings. In the following embodiment and modifications thereof, components that are substantially the same will be designated by the same reference numerals and redundant description thereof may be omitted as appropriate.

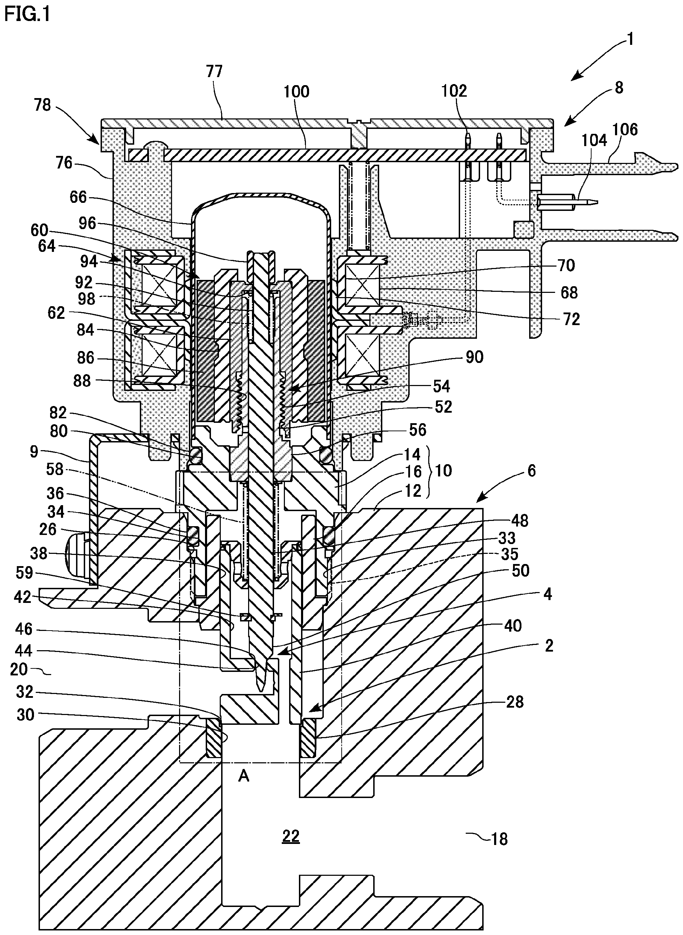

FIG. 1 is a cross-sectional view of a motor operated valve according to the embodiment.

The motor operated valve 1 is applied to a refrigeration cycle of an automotive air conditioner, which is not illustrated. The motor operated valve 1 is a combination valve including a first valve 2 with a large diameter and a second valve 4 with a small diameter, which are arranged coaxially and driven by one actuator. The first valve 2 and the second valve 4 are proportional valves capable of adjusting the valve opening degree thereof. The first valve 2 can also function as an on-off valve for opening and closing a refrigerant circulation passage. The second valve 4 can also function as an expansion valve for throttling and expanding refrigerant flowing from the upstream side thereof.

The motor operated valve 1 is constituted by an assembly of a valve unit 6 and a motor unit 8. The valve unit 6 and the motor unit 8 are fixed with a connecting member 9 therebetween. The valve unit 6 has a common body 10 containing the first valve 2 and the second valve 4. The body 10 is constituted by an assembly of a first body 12, a second body 14, and a guiding member 16, which are arranged coaxially. In the present embodiment, the bodies are both made of stainless steel (hereinafter referred to as "SUS").

The first body 12 has a bottomed cylindrical shape (block-like shape), with an inlet port 18 in a lower part of one lateral face thereof and an outlet port 20 in an upper part of the opposite lateral face. A refrigerant passage 22 through which the inlet port 18 and the outlet port 20 communicate is formed in the first body 12. Refrigerant from the upstream side is introduced into the refrigerant passage 22 through the inlet port 18, passes through the valve section, and then delivered to the downstream side through the outlet port 20. The first body 12 has, at the center of an upper part thereof, a mounting hole 26 having a stepped circular hole shape, which communicates with a middle part of the refrigerant passage 22. The diameter of the mounting hole 26 increases upward in a stepwise manner. The guiding member 16, and the second body 14 are mounted in this order through the mounting hole 26.

An annular valve seat forming member 28 is press-fitted into a stepped portion formed at a middle part of the refrigerant passage 22. A first valve hole 30 is formed inside the valve seat forming member 28 coaxially with the mounting hole 26. A first valve seat 32 is formed at a downstream-side opening of the first valve hole 30. Rubber is baked onto the inner circumferential face of the valve seat forming member 28 along the first valve hole 30 and the first valve seat 32, so as to improve sealing thereof (details of which will be described later).

The second body 14 has a stepped cylindrical shape. A lower part of the second body 14 is inserted in the mounting hole 26 and thus mounted on the first body 12. An internal thread 33 is formed on an inner circumferential face of the mounting hole 26, and an external thread 35 is formed on an outer circumferential face of a lower part of the second body 14. The second body 14 is fastened to the first body 12 by these threads. A seal accommodating portion 34, which is an annular groove, is formed on the outer circumferential face of the second body 14 (slightly above the external thread 35), and a seal ring 36 (0 ring) is fitted therein. The seal ring 36 between the mounting hole 26 and the second body 14 prevents leakage of refrigerant from inside the valve unit 6 to the outside.

The guiding member 16 is a cylindrical member made of SUS and coated with lubricating plating. A lower part of the guiding member 16 is slightly increased in diameter, and the guiding member 16 is press-fitted in a lower part of the mounting hole 26. The guiding member 16 is thus fixed to the first body 12. An inner circumferential face of the guiding member 16 defines a guiding hole 38. A lower part of the second body 14 is inserted in an annular space between an inner circumferential face of the mounting hole 26 and an outer circumferential face of the guiding member 16. A predetermined clearance is present between the second body 14 and the guiding member 16, so that the second body 14 and the guiding member 16 are not in contact with each other.

A first valve element 40 is located inside the guiding member 16. The first valve element 40 has a bottomed cylindrical shape, and is slidably supported in the guiding hole 38. The first valve element 40 touches and leaves the first valve seat 32 from the downstream side to close and open the first valve 2. In addition, an internal passage 42 is formed in the first valve element 40, and a second valve hole 44 is formed on the internal passage 42. A second valve seat 46 is formed at an upstream-side opening of the second valve hole 44.

A actuating rod 48 extending from a rotor 60 of the motor unit 8 is inserted in the body 10. A lower part of the actuating rod 48 is coaxially inserted in the first valve element 40. The actuating rod 48 is produced by cutting a rod material made of non-magnetic metal. A needle-like second valve element 50 is formed integrally with a lower part of the actuating rod 48. The second valve element 50 touches and leaves the second valve seat 46 from the upstream side to close and open the second valve 4.

A guiding member 52 is provided vertically at the center of an upper part of the second body 14. The guiding member 52 is produced by cutting a tubular material made of non-magnetic metal into a stepped cylindrical shape. An external thread 54 is formed on an outer circumferential face of a middle part in the axial direction of the guiding member 52. A lower end portion of the guiding member 52 is enlarged in diameter, and this large-diameter portion 56 is press-fitted in the center of an upper portion of the second body 14 and thus fitted coaxially thereto. The guiding member 52 slidably supports the actuating rod 48 in the axial direction by an inner circumferential face thereof, and rotatably and slidably supports a rotating shaft 62 of the rotor 60 by an outer circumferential face thereof.

A spring 58 (which functions as a "biasing member") that biases the first valve element 40 in the valve closing direction is present between the guiding member 52 and the first valve element 40. A radially projecting stopping portion 59 is present on the actuating rod 48 at a position slightly above the second valve element 50. The stopping portion 59 is an E ring, for example. The stopping portion 59 is caught by the first valve element 40, which enables the first valve element 40 to be lifted in the valve opening direction against the biasing force of the spring 58. The mechanism of operably coupling the first valve element 40 and the second valve element 50 to each other so that the first valve element 40 and the second valve element 50 are movable integrally with each other with the actuating rod 48 therebetween will be referred to as an "operably coupling mechanism". Details thereof will be described later.

The motor unit 8 is a stepping motor including the rotor 60 and a stator 64. The motor unit 8 includes a can 66 having a bottomed cylindrical shape. The rotor 60 is located inside the can 66, and the stator 64 is located outside of the can 66. The can 66 is a bottomed-cylindrical member covering a space in which the second valve element 50 and a mechanism for driving the second valve element 50 are disposed and containing the rotor 60, and defines an internal pressure acting space (internal space) in which the pressure of the refrigerant acts and an external non-pressure acting space (external space) in which the pressure of the refrigerant does not act.

The can 66 is made of non-magnetic metal (which is SUS in the present embodiment), and coaxially mounted on the second body 14 in such a manner that a lower portion thereof is mounted (outserted) around an upper end portion of the second body 14. The boundary between a lower end of the can 66 and the second body 14 is fully welded, which is not illustrated, so that the body 10 and the can 66 are fixed to each other and sealing therebetween is achieved. A space surrounded by the body 10 and the can 66 corresponds to the aforementioned pressure acting space.

Because the guiding member 16 is a member separate from the second body 14, the welded component (second body 14) and the component with lubricating coating (guiding member 16) can be produced separately. Thus, additional work such as coating the guiding hole 38 with a plating film or vapor deposition of a plating material thereon need not be performed, but immersion of the entire material of the guiding member 16 in a plating solution is sufficient, which simplifies manufacturing processes.

The stator 64 includes a bobbin 70, around which a coil 68 is wound, mounted on a yoke 72 having a plurality of pole teeth. The stator 64 is integrated with a case 76 of the motor unit 8. Specifically, the case 76 is formed by injection molding (also called "insert molding" or "molding") of a corrosion-resistant resin (plastic). The stator 64 is coated with molding resin by the injection molding. The case 76 is made of the molding resin. Hereinafter, the molded stator 64 and case 76 will also be referred to as a "stator unit 78".

The stator unit 78 has a hollow structure in which the can 66 is coaxially inserted, and is mounted on the body 10. A seal accommodating portion 80, which is an annular groove, is formed on the outer circumferential face of the upper part of the second body 14, and a seal ring 82 (O ring) is fitted in the seal accommodating portion 80. The seal ring 82 between the second body 14 and the case 76 prevents an external atmosphere (such as water) from entering a gap between the can 66 and the stator 64.

The rotor 60 includes a cylindrical rotor core 84 mounted on the rotating shaft 62, and a rotor magnet 86 provided along an outer circumferential face of the rotor core 84. The rotor core 84 is mounted on the rotating shaft 62. The rotor magnet 86 is magnetized with a plurality of poles in the circumferential direction.

The rotating shaft 62 is a bottomed cylindrical shaft mounted (outserted) around the guiding member 52 and having an open end facing downward. An internal thread 88 formed on an outer circumferential face of a lower portion of the rotating shaft 62 engages with the external thread 54 of the guiding member 52. These threads constitute a feed screw mechanism 90 that converts the rotational movement of the rotor 60 into the axial movement of the actuating rod 48. This moves the second valve element 50 upward and downward in the axial direction, that is, in the opening and closing directions of the valve section.

An upper portion of the actuating rod 48 is reduced in diameter, and this reduced-diameter portion 92 extends through a bottom 94 of the rotating shaft 62. An annular stopper 96 is fixed to a leading end of the reduced-diameter portion 92. A spring 98 for biasing the actuating rod 48 downward (that is, in the valve closing direction) is provided between a base end of the reduced-diameter portion 92 and the bottom 94. In this structure, while the valve is being opened, the actuating rod 48 is moved integrally with the rotor 60, with the stopper 96 being stopped by the bottom 94. In contrast, while the valve is being closed, the spring 98 is compressed by reaction force that the second valve element 50 receives from the second valve seat 46. In this process, the elastic reaction force of the spring 98 presses the second valve element 50 against the second valve seat 46, which increases the seating performance (valve closing performance) of the second valve element 50.

The motor unit 8 includes a circuit board 100 on the outer side of the can 66. The circuit board 100 is fixed inside the case 76. In the present embodiment, various circuits that function as a control unit, a communication unit, and the like are mounted on a lower face of the circuit board 100. Specifically, a drive circuit for driving the motor, a control circuit (microcomputer) for outputting control signals to the drive circuit, a communication circuit for the control circuit to communicate with an external device, a power supply circuit for supplying power to the circuits and the motor (coil), etc. The upper end of the case 76 is closed by a cap member 77. The circuit board 100 is located in a space in the case 76, below the cap member 77.

A terminal 102 connected with the coil 68 extends from the bobbin 70 and is connected with the circuit board 100. A power supply terminal, a ground terminal, and a communication terminal (which are also collectively referred to as "connection terminals 104") extend from the circuit board 100, and are drawn through a side wall of the case 76 to the outside. A connector part 106 is formed integrally with the side of the case 76, and the connection terminals 104 are located inside the connector part 106.

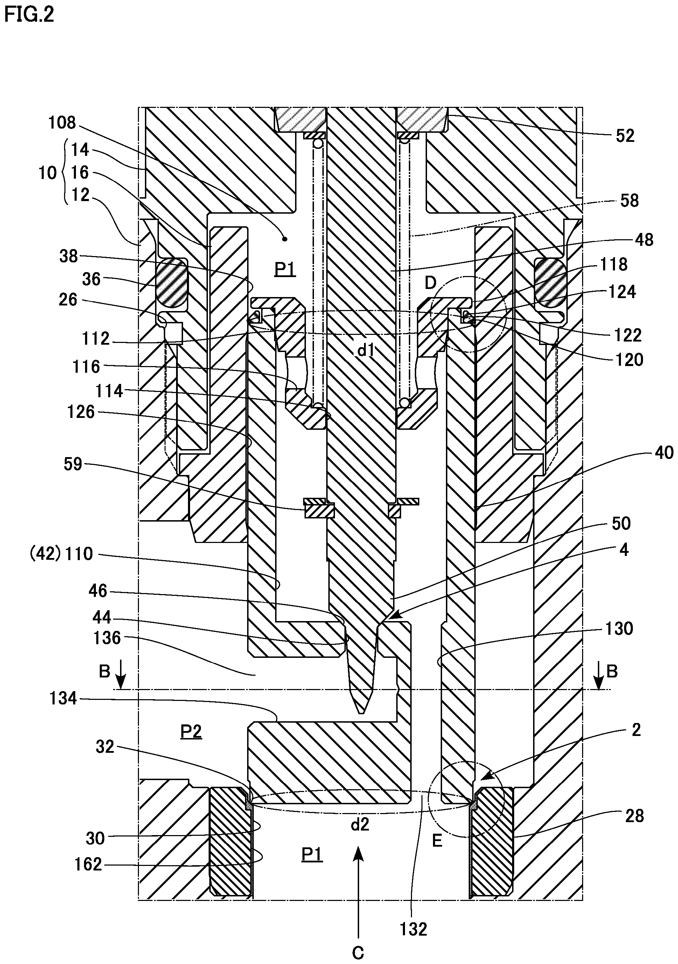

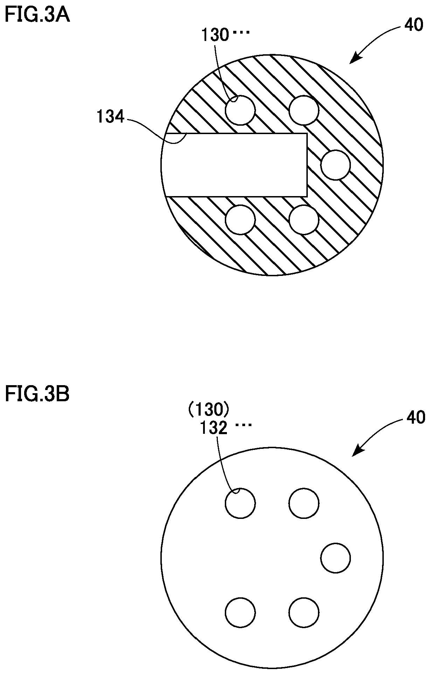

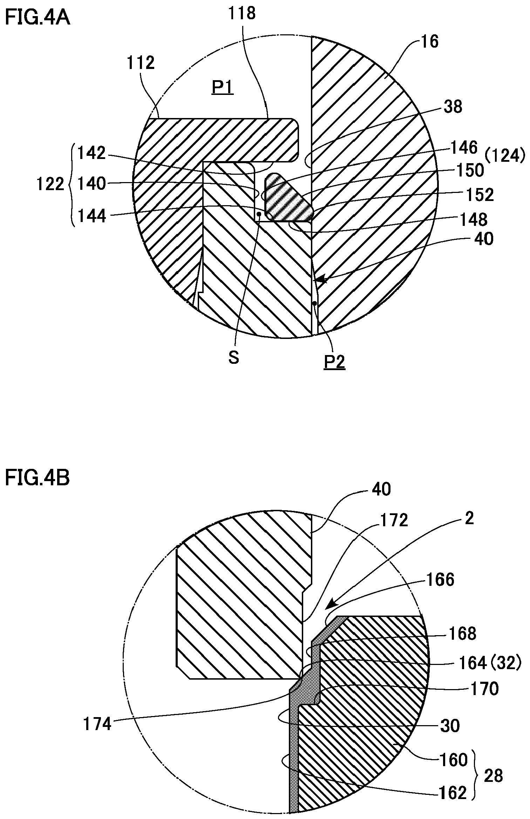

FIG. 2 is an enlarged view of part A in FIG. 1. FIGS. 3A and 3B illustrate a structure of the internal passage of the first valve element 40. FIG. 3A corresponds to a cross-sectional view taken along arrows B-B in FIG. 2, and FIG. 3B corresponds to a view in a direction C in FIG. 2. FIGS. 4A and 4B are enlarged views of main parts around the first valve element 40. FIG. 4A is an enlarged view of part D in FIG. 2, and FIG. 4B is an enlarged view of part E in FIG. 2.

As illustrated in FIG. 2, the first valve element 40 has a bottomed cylindrical shape with a bottom having a sufficient thickness. A back pressure chamber 108 is formed above the first valve element 40. The back pressure chamber 108 is a space surrounded by the guiding member 52, the second body 14, the guiding member 16, and the first valve element 40. A valve chamber 110 is formed inside the first valve element 40 (above the bottom thereof). An operably-coupling member 112 having a bottomed and stepped cylindrical shape is coaxially inserted in and fixed to an upper portion of the first valve element 40. The operably-coupling member 112 is made of a material, such as brass, that is softer and more workable than the first valve element 40.

The operably-coupling member 112 has an insertion hole 114 at the center of the bottom thereof. The actuating rod 48 coaxially extends through the insertion hole 114. A plurality of communication holes 116 connecting the inside with the outside of the operably-coupling member 112 are formed in a lateral side of the operably-coupling member 112. The valve chamber 110 and the back pressure chamber 108 communicate with each other through the communication holes 116. The operably-coupling member 112 is fixed to the first valve element 40 in such a manner that an upper portion thereof is press-fitted in an upper end opening of the first valve element 40.

A flange portion 118 extending radially outward is formed on an upper end of the operably-coupling member 112. In addition, an annular step 120 is formed along an upper end circumferential edge of the first valve element 40. An annular seal accommodating portion 122 is formed by the flange portion 118 and the step 120 at the upper portion of the first valve element 40. A seal ring 124 is fitted into the seal accommodating portion 122. The seal ring 124 restricts the flow of refrigerant through a gap between the first valve element 40 and the guiding member 16. Details of the seal ring 124 and around the seal ring 124 will be described later.

The bottom of the operably-coupling member 112 also functions as a spring support that supports the spring 58. Specifically, the spring 58 is coaxially mounted (outserted) around the actuating rod 48 and between the bottom of the guiding member 52 and the bottom of the operably-coupling member 112. The biasing force of the spring 58 is transmitted to the first valve element 40 via the operably-coupling member 112. In addition, the valve opening operation of the second valve element 50 moves the stopping portion 59 relative to the first valve element 40, the stopping portion 59 then comes into contact with the bottom face of the operably-coupling member 112 and pushes the operably-coupling member 112 upward, and the first valve element 40 can thus move in the valve opening direction.

The face of the guiding hole 38 facing the outer circumferential face of the first valve element 40 has an enlarged-diameter portion 126 at which the diameter of the guiding hole 38 is partially and slightly increased. The enlarged-diameter portion 126 extends from a middle position to a lower position of the guiding hole 38 in the axial direction, and forms a clearance between the enlarged-diameter portion 126 and the first valve element 40. As illustrated, however, the first valve element 40 is in contact with the face of the guiding hole 38 at positions upper and lower than the enlarged-diameter portion 126, which enables stable sliding. The presence of the enlarged-diameter portion 126 limits the sliding area of the first valve element 40 and the guiding hole 38 relative to each other, which reduces the sliding resistance (friction) of the first valve element 40.

In addition, as described above, the guiding hole 38 is coated with lubricating plating. For the material of the lubricating plating, a known lubricating plating material such as nickel-phosphorus (Ni-P) containing polytetrafluoroethylene (hereinafter also referred to as "PTFE") can be used. Such surface processing of a sliding surface also reduces the sliding resistance.

A plurality of (five, in the present embodiment) communication holes 130 (small holes) passing through a bottom of the first valve element 40 in parallel with the axis are formed (FIGS. 3A and 3B). Lower end openings of the communication holes 130 constitute an inflow port 132. The communication holes 130 connect the upstream side of the first valve seat 32 in the first valve hole 30 with the valve chamber 110. The communication holes 130, the valve chamber 110, and the communication holes 116 constitute a "communication passage" through which the upstream side of the first valve seat 32 and the back pressure chamber 108 communicate. In addition, a downstream side passage 134 extending in a direction perpendicular to the axis is formed at the bottom of the first valve element 40. The downstream side passage 134 has an outflow port 136 open toward the outlet port 20.

The valve chamber 110 and the downstream side passage 134 communicate with each other via the second valve hole 44. The communication holes 130 are arranged so as not to intersect the downstream side passage 134. The downstream side passage 134 has a cross section that is sufficiently larger than that of the communication holes 130. The communication holes 130, the valve chamber 110, the second valve hole 44, and the downstream side passage 134 constitute the internal passage 42 of the first valve element 40. The second valve element 50 has a leading end that passes through the second valve hole 44 and a tapered face that touches and leaves the second valve seat 46.

When the first valve 2 is closed or slightly open as illustrated, the pressure upstream of the first valve seat 32 (upstream side pressure P1) is higher than the pressure downstream of the first valve seat 32 (downstream side pressure P2). In the meantime, because the back pressure chamber 108 communicates with the upstream side of the first valve seat 32 via the valve chamber 110 and the communication holes 130, the pressure in the back pressure chamber 108 (also referred to as "back pressure") is approximately equal to the upstream side pressure P1. Thus, the fluid pressure on the first valve element 40 is substantially cancelled out.

In the present embodiment, in order to increase the valve closing performance of the first valve 2, a sliding portion diameter d1 of the first valve element 40 (the inner diameter of the guiding hole 38) is slightly larger than a sealing diameter d2 (the outer diameter of the valve seat). Because the difference between these diameters is small, however, the fluid pressure on the first valve element 40 is substantially cancelled out as described above. Thus, the resistance in lifting the first valve element 40 in the valve opening direction can be made smaller, and the rotational torque (rotational driving force) of the motor unit 8 necessary for opening the first valve 2 can be reduced.

In addition, a pressure difference (P1-P2) between the upstream side pressure P1 and the downstream side pressure P2 is produced in a gap between the first valve element 40 and the guiding hole 38. In this regard, in the present embodiment, the seal ring 124 restricts leakage of refrigerant from a higher pressure side to a lower pressure side via the gap.

As illustrated in FIG. 4A, the seal accommodating portion 122 is an annular recessed portion along an upper portion of the outer circumferential face the first valve element 40 and having a bottom face 140, a high-pressure side face 142, and a low-pressure side face 144. The seal ring 124 is a triangular ring having a triangular cross section and being in contact with the inner circumferential of the guiding hole 38 at one corner thereof.

More specifically, the cross-sectional shape of the seal ring 124 is a right-angled triangle with R chamfered (round chamfered) corners. The seal ring 124 has an inner circumferential face 146, which is a flat face, and a lower face 148, which is perpendicular to the inner circumferential face 146 and in contact with the low-pressure side face 144 of the seal accommodating portion 122. The seal ring 124 has an upper face 150, which is an inclined face (tapered face). The corner between the upper face 150 and the lower face 148 constitutes an outer circumferential face 152 of the seal ring 124. The seal ring 124 slides at the outer circumferential face 152 in the guiding hole 38.

This structure makes the contact area of the seal ring 124 in contact with the inner circumferential face of the guiding hole 38 smaller than the contact area of the seal accommodating portion 122 in contact with the low-pressure side face 144. In other words, as compared with a case of an O ring, the sliding area of the seal ring 124 relative to the guiding hole 38 can be made smaller, and the sliding resistance of the first valve element 40 can be reduced.

The width of the seal accommodating portion 122 (that is, the distance between the high-pressure side face 142 and the low-pressure side face 144) is larger than the width of the seal ring 124 in the axial direction (that is, the width of the first valve element 40 in the axial direction). In the state in which the first valve 2 is closed or slightly open, the pressure difference (P1-P2) acts on the seal ring 124, and the seal ring 124 is thus in close contact with the low-pressure side face 144 as illustrated. A space S is formed between the bottom face 140 of the seal accommodating portion 122 and the inner circumferential face 146 of the seal ring 124 (between the bottom face 140 and a face of the seal ring 124 facing each other). Thus, even when the seal ring 124 is compressed and deformed in the axial direction by the pressure difference, the inner circumferential face 146 does not come into contact with the bottom face 140. This means that there is no reaction force from the bottom face 140 pushing the seal ring 124 against the guiding hole 38, and an increase in the sliding resistance can thus be avoided.

As illustrated in FIG. 4B, the valve seat forming member 28 has a body 160 made of SUS, and rubber 162 is baked along an inner circumferential face of the body 160. The valve seat forming member 28 has, at an upper end opening hereof, a first tapered face 164 that functions as the first valve seat 32 (the face which the first valve element 40 touches and leaves), and a second tapered face 166 constituting an open end of the first valve hole 30. The first valve hole 30 has a two-step tapered structure including a straight portion 168, which is parallel to the axis of the first valve element 40, between the first tapered face 164 and the second tapered face 166. The body 160 has a stepped portion 170 having a right-angled shape at a position corresponding to the first valve seat 32. The portion between the stepped portion 170 and the first tapered face 164 is a thick portion of the rubber 162. In other words, the thickness of the rubber 162 is increased at the position of the first valve seat 32. This increases the durability of the first valve seat 32.

The first valve element 40 has a small-diameter portion 172 with a reduced diameter at a lower end portion (leading end portion) thereof. A lower-end outer circumferential edge of the small-diameter portion 172 constitutes an edge portion 174. The edge portion 174 has a substantially right-angled cross section, but is slightly R chamfered (round chamfered) so as not to damage the first valve seat 32. The structure of the first valve 2 for opening and closing thereof includes an insertion and removal structure in which the small-diameter portion 172 moves coaxially into and out of the first valve hole 30 and a touching and leaving structure in which the edge portion 174 touches and leaves the first tapered face 164 in a state in which the small-diameter portion 172 is inserted in the first valve hole 30.

Next, the operation of the motor operated valve 1 will be explained.

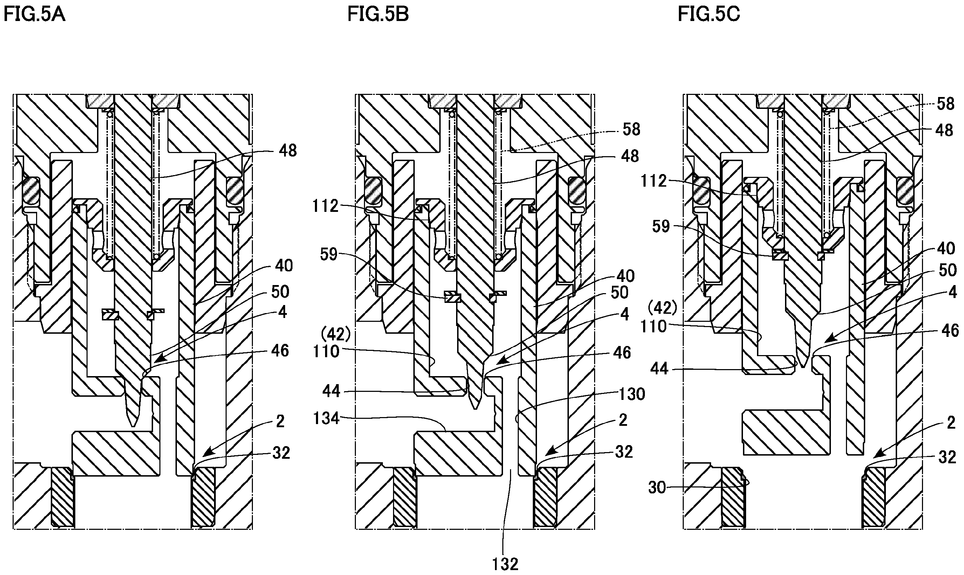

FIGS. 5A to 5C illustrate processes of the operation of the motor operated valve 1. FIG. 5A illustrates a state in which the first valve 2 and the second valve 4 are closed. FIG. 5B illustrates a state in which the first valve 2 is closed and the second valve 4 is open. FIG. 5C illustrates a state in which the first valve 2 and the second valve 4 are open.

When the motor unit is driven in the valve opening direction to move the actuating rod 48 upward, the second valve element 50 leaves the second valve seat 46 (FIGS. 5A and 5B). As a result, the communication holes 130, the valve chamber 110, the second valve hole 44, and the downstream side passage 134 communicate with each other. Refrigerant from the upstream side flows through the internal passage 42 of the first valve element 40, and delivered to the downstream side via the second valve 4. In this process, the second valve 4 is adjusted to have a predetermined opening degree, so that the second valve 4 functions as an expansion valve.

When the actuating rod 48 is further moved in the valve opening direction, the stopping portion 59 engages with the operably-coupling member 112, and the actuating rod 48 and the first valve element 40 are thus operably coupled to each other (FIG. 5C). The actuating rod 48 then lifts the first valve element 40 against the biasing force of the spring 58. As a result, the first valve element 40 leaves the first valve seat 32, and the first valve 2 thus opens. Refrigerant flows to the downstream side via both of the first valve 2 and the second valve 4. In this state, a large amount of refrigerant can flow, but the flow rate can be adjusted by the opening degree of the first valve 2.

When the motor unit is driven in the valve closing direction, conversely, the actuating rod 48 moves downward. In this process, the first valve element 40 moves in the valve closing direction with the operable coupling with the actuating rod 48 being maintained by the biasing force of the spring 58. Then, the first valve element 40 first touches the first valve seat 32, and the first valve 2 is closed. When the actuating rod 48 is further moved in the valve closing direction, the stopping portion 59 leaves the operably-coupling member 112, and the operable coupling of the actuating rod 48 and the first valve element 40 is released. The second valve element 50 then touches the second valve seat 46, and the second valve 4 is closed. Note that, in a specific operation state of the motor operated valve 1 such as in a state in which the second valve 4 is open, the load in the valve closing direction on the first valve element 40 is not applied by the motor unit but is applied by the spring 58.

Next, the effects of the present embodiment will be explained.

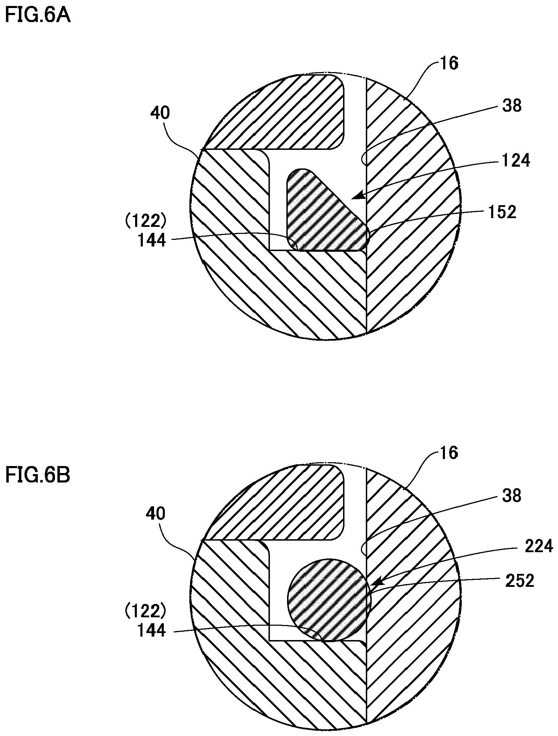

FIGS. 6A and 6B are partially enlarged views illustrating a structure for reducing the sliding resistance with the seal ring 124. FIG. 6A illustrates the structure in the present embodiment, and FIG. 6B illustrates a structure in a first comparative example. The first comparative example is a case where an O ring is used as the seal ring.

As described above, the seal ring 124 in the present embodiment has a right-angled triangular cross section, and one corner (the outer circumferential face 152) thereof is in close contact with the face of the guiding hole 38, so as to achieve a high sealing property (FIG. 6A). The seal ring 124 comes in contact with the low-pressure side face 144 of the seal accommodating portion 122 at a flat face that is complementary to the shape of the low-pressure side face 144, and the contact area therebetween is sufficiently large. Thus, the seal ring 124 is not easily deformed by the pressure difference (P1-P2), and stably keeps the shape thereof. Consequently, the first valve element can stably slide along the guiding hole 38 with reduced sliding resistance.

In contrast, an O ring 224 in the first comparative example is typically used as a seal ring mounted on a sliding portion, but the contact area between the O ring 224 and the inner circumferential face of the guiding hole 38 is larger than that between the O ring 224 and the low-pressure side face 144 of the seal accommodating portion 122. When the pressure difference (P1-P2) is applied, the O ring 224 is axially pressed, and expands radially. Thus, as compared with the present embodiment, the sliding resistance of the first valve element 40 is larger. In other words, use of the seal ring 124 according to the present embodiment effectively reduces the sliding resistance.

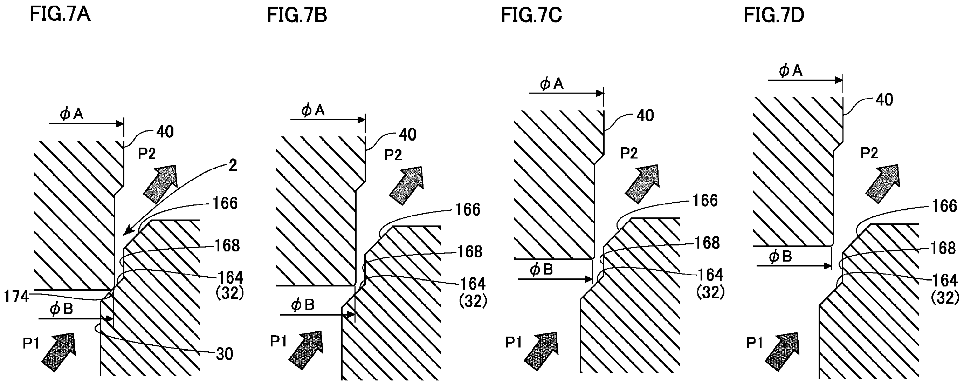

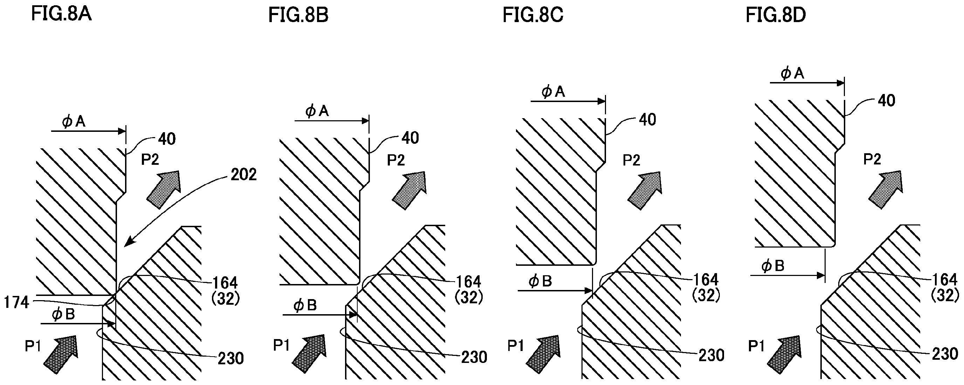

FIGS. 7A to 7D and 8A to 8D illustrate the operation of reducing the pressure difference by the structure of the first valve 2. FIGS. 7A to 7D illustrate changes in a pressure receiving area at valve opening in the case where the valve structure of the present embodiment is employed. FIGS. 8A to 8D illustrate changes in a pressure receiving area at valve opening in a case where a valve structure according to a second comparative example is employed. The valve structure according to the second comparative example does not have the insertion and removal structure (see FIG. 4B) of the present embodiment.

In the figures, ϕA represents the pressure receiving diameter of the first valve element 40 receiving the back pressure, which is equal to the sliding portion diameter d1 in FIG. 2. In the figures, ϕB represents the pressure receiving diameter of the sealing of the first valve element 40, which is equal to the sealing diameter d2 in FIG. 2 when the first valve 2 is closed. As described above, d1 > d2 in the present embodiment. While the pressure receiving diameter ϕA does not change but the pressure receiving diameter ϕB changes depending on whether the first valve 2 is open or closed. The pressure difference (P1-P2) acts in the valve closing direction on the first valve element 40 over a pressure receiving area corresponding to the difference (ϕA-ϕB) between the pressure receiving diameters.

In the present embodiment, in a state in which the first valve 2 is closed, the first valve element 40 touches the first valve seat 32, and the pressure receiving diameter ϕB is therefore substantially equal to the outer diameter of the edge portion 174 (FIG. 7A). In this state, the pressure difference (P1-P2) reaches its largest. With the structure in which the pressures are cancelled as described above, however, an appropriate force is applied to the first valve element 40 in the valve closing, which stably maintains the valve closed state.

Even when the first valve element 40 starts a valve opening operation, the clearance between the first valve element 40 and the first valve hole 30 is affected by the upstream side pressure P1 while the leading end of the first valve element 40 is inside the straight portion 168 of the first valve hole 30 (FIGS. 7B and 7C). Thus, the pressure receiving diameter ϕB changes little. As a result, the difference (ϕA-ϕB) between the pressure receiving diameters is kept small, which reduces the influence of the pressure difference (P1-P2), that is, an increase in the load in the valve closing direction.

When the leading end of the first valve element 40 moves out of the straight portion 168, the pressure receiving diameter ϕB gradually decreases. The decrease, however, is slow while the leading end of the first valve element 40 is inside the second tapered face 166 (FIG. 7D). As the opening degree of the first valve 2 becomes larger, the pressure difference (P1-P2) itself becomes smaller, and the increase in the load in the valve closing direction is suppressed.

In contrast, in the second comparative example, because the first valve hole 230 does not have the straight portion as in the present embodiment, the influence of the upstream side pressure P1 is less likely remain. In other words, as the valve opening degree increases from immediately after the start of the valve opening operation of the first valve element 40, the pressure receiving diameter ϕB decreases (FIGS. 8A to 8D), and the difference (ϕA-ϕB) between the pressure receiving diameters increases. As a result, the load in the valve closing direction increases before the pressure difference (P1-P2) decreases. This increases the load on the motor during opening of the first valve 202.

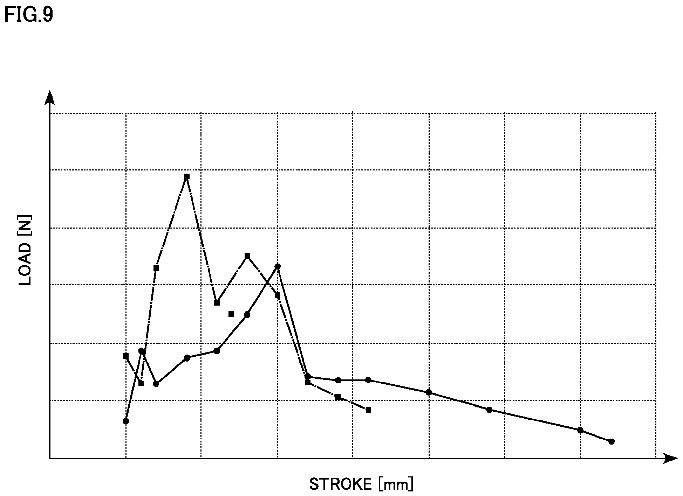

FIG. 9 is a graph showing the variation of the load in the valve opening direction applied to the first valve element 40 by the valve opening operation. In FIG. 9, the horizontal axis represents the stroke of the first valve element 40 in the valve opening direction, and the vertical axis represents the load in the valve closing direction received by the first valve element 40. The "load" used herein refers to a load applied to the first valve element 40 by the pressure difference (P1-P2), and FIG. 9 shows results of analysis of the load. In FIG. 9, a solid line represents an analysis result in the present embodiment, and a one-dot chain line represents an analysis result in the second comparative example.

The analysis results show that the increase in the load at the start of opening of the first valve can be suppressed and the peak of the load can be made small in the present embodiment as compared with the second comparative example. This is considered to be because of the pressure difference reducing operation as described above. The analysis results also show that, after the slightly open state, the pressure difference (P1-P2) itself becomes smaller, and the load thus becomes smaller.

As described above, in the present embodiment, the seal ring 124 has a right-angled triangular cross section. One corner thereof is in close contact with the face of the guiding hole 38, and a flat face thereof is in contact with the low-pressure side face 144 of the seal accommodating portion 122, which is also a flat face. As a result, the contact area between the seal ring 124 and the guiding hole 38 is smaller than the contact area between the low-pressure side face 144 of the seal accommodating portion 122 and the seal ring 124. This structure achieves a high sealing property between the first valve element 40 and the guiding hole 38, and reduces the sliding resistance. As a result, the rotational torque of the motor unit 8 is reduced. Furthermore, deformation of the seal ring 124 is suppressed, and the first valve element 40 can stably slide along the guiding hole 38.

In addition, in the present embodiment, the opening and closing structure of the first valve 2 includes the insertion and removal structure in which the leading end of the first valve element 40 moves into and out of the first valve hole 30, and the touching and leaving structure in which the edge portion of the first valve element 40 touches and leaves the tapered face of the first valve seat 32. Thus, the straight portion 168 is formed near the first valve seat 32 in the first valve hole 30 to form a minute clearance between the leading end of the first valve element 40 and the first valve hole 30 in the state in which the first valve 2 is closed or slightly open. This suppresses a change in the pressure receiving diameter of the first valve element 40 at valve opening, and makes the load in the valve closing direction applied to the first valve element 40 smaller. As a result, the load on the motor can be reduced. In the present embodiment, while the load in the valve closing direction is largest at valve opening, this load can be suppressed, and the motor unit 8 can therefore be reduced in size.

Furthermore, in the present embodiment, in the first valve 2 with a large diameter, the rubber 162 is baked to cover the position of the first valve seat 32. Thus, the rubber is moderately deformed when the first valve 2 is closed, which improves the sealing property of the valve section. Necessary valve closing performance can therefore be achieved without making the load on the motor unit 8 particularly higher. Consequently, the load on the motor unit 8 can be reduced. In addition, the thickness of the rubber 162 is increased at the position of the first valve seat 32, which increases the durability of the first valve seat 32.

The embodiment of the present invention has been described above. The present invention is not limited to the embodiment and it will be obvious that various modifications could be further developed within the technical idea underlying the present invention.

### [Modifications]

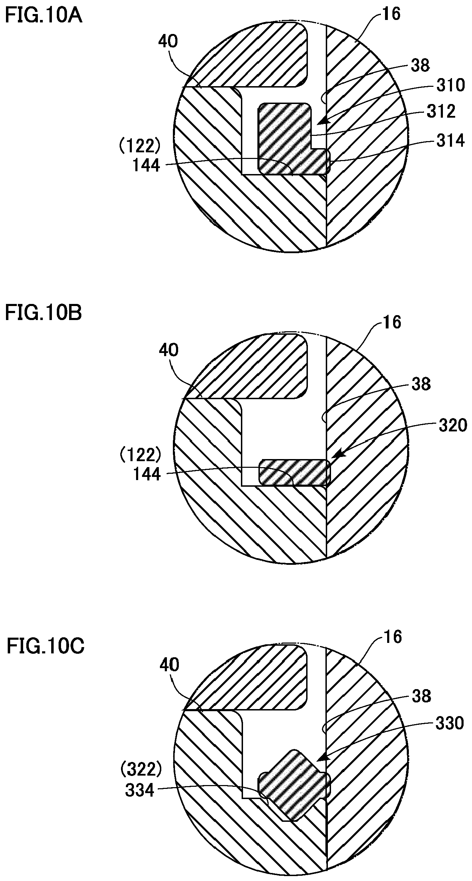

FIGS. 10A and 10B are partially enlarged views illustrating structures of seal rings according to modifications. FIG. 10A illustrates a first modification, FIG. 10B illustrates a second modification, and FIG. 10C illustrates a third modification.

Each of the seal rings according to the modifications has a polygonal cross section. In each of the modifications, the contact area between the seal ring and the guiding hole is smaller than the contact area between the low-pressure side face of the seal accommodating portion and the seal ring.

A seal ring 310 of the first modification has a stepped-rectangular cross section, with an upper part having an outer diameter smaller than that of a lower part thereof (FIG. 10A) . Specifically, the seal ring 310 has a small-diameter portion 312 (upper portion) and a diameter-enlarged portion 314 (lower portion), and slides relative to the guiding hole 38 at the diameter-enlarged portion 314. The presence of the small-diameter portion 312 achieves the stiffness of the seal ring 310, and limitation of the sliding portion to the diameter-enlarged portion 314 reduces the sliding resistance.

A seal ring 320 of the second modification corresponds to the diameter-enlarged portion 314 in the first modification, and has a rectangular cross section with a small height (FIG. 10B). In this structure as well, the sliding area relative to the guiding hole 38 is small, which reduces the sliding resistance.

A seal ring 330 of the third modification has a substantially rhombic cross-sectional shape with an outer circumferential portion and an inner circumferential portion slightly projecting in the radial direction. An annular groove that is complementary to the shape of the lower face of seal ring 330 is formed on the low-pressure side face 334 of the seal accommodating portion 322. The rhombic shape has a cross-sectional area comparable to that in the first modification, which achieves the stiffness. In addition, the shape of the lower face of the seal ring 330 complementary to that of the low-pressure side face 334 keeps the seal ring 330 stable and achieves good sealing performance.

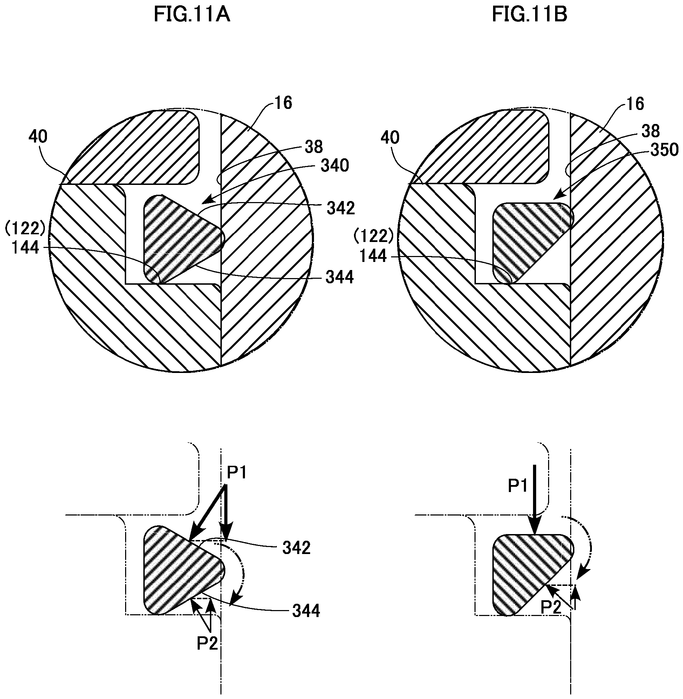

FIGS. 11A and 11B are partially enlarged views illustrating the structures of seal rings according to other modifications. FIG. 11A illustrates a fourth modification, and FIG. 11B illustrates a fifth modification. In each of FIGS. 11A and 11B, upper part illustrates a state in which no pressure difference acts on the seal ring. Lower part schematically illustrates the behavior when a pressure difference acts on the seal ring.

A seal ring 340 of the fourth modification has an equilateral-triangular cross section with R chamfered corners (upper part in FIG. 11A). The upper face 342 and the lower face 344 of the seal ring 340 are inclined faces (tapered faces). When the pressure difference (P1-P2) acts on the seal ring 340, an axial component of the pressure difference acts downward (lower part of FIG. 11A). A turning moment or a bending moment thus acts on the cross section of the seal ring 340 (see a two-dot chain arrow) . Consequently, the cross-section of the seal ring 340 is deformed. The contact area between the seal ring 340 and the guiding hole 38 is smaller than the contact area between the low-pressure side face 144 of the seal accommodating portion 122 and the seal ring 340. This enables the first valve element 40 to stably slide along the guiding hole 38 with reduced sliding resistance.

A seal ring 350 of the fifth modification has a vertically-reversed shape of that of the seal ring 124 in the embodiment, and has a right-angled triangular cross section (upper part of FIG. 11B). When the pressure difference (P1-P2) acts on the seal ring 350, an axial component of the pressure difference acts downward (lower part of FIG. 11B). Thus, in a manner similar to the fourth modification, a turning moment or a bending moment acts on the cross section of the seal ring 350 (see a two-dot chain arrow). Consequently, the contact area between the seal ring 350 and the guiding hole 38 is smaller than the contact area between the low-pressure side face 144 of the seal accommodating portion 122 and the seal ring 350. This enables the first valve element 40 to stably slide along the guiding hole 38 with reduced sliding resistance.

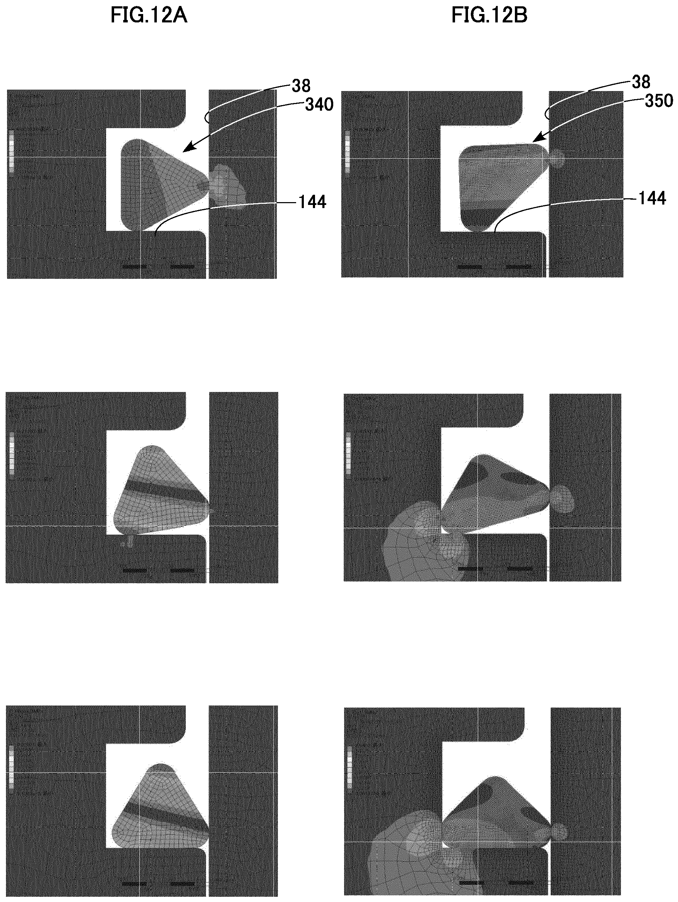

FIGS. 12A and 12B illustrate results of analysis of deformation of seal rings caused by the pressure difference. FIG. 12A shows results of analysis in the fourth modification, and FIG. 12B shows results of analysis in the fifth modification. In FIGS. 12A and 12B, the pressure difference (P1-P2) increases from an upper result to a lower result.

The analysis shows that, in the fourth modification, the pressure difference deforms the seal ring 340, and the contact area of the seal ring 340 in contact with the guiding hole 38 is smaller than the contact area thereof with the low-pressure side face 144. The sliding face pressure (sliding resistance) after the deformation of the seal ring 340 is also small (FIG. 12A). Similarly, in the fifth modification, the pressure difference deforms the seal ring 350, and the contact area of the seal ring 350 in contact with the guiding hole 38 is smaller than the contact area thereof with the low-pressure side face 144. The sliding face pressure (sliding resistance) after the deformation of the seal ring 350 is also small (FIG. 12B).

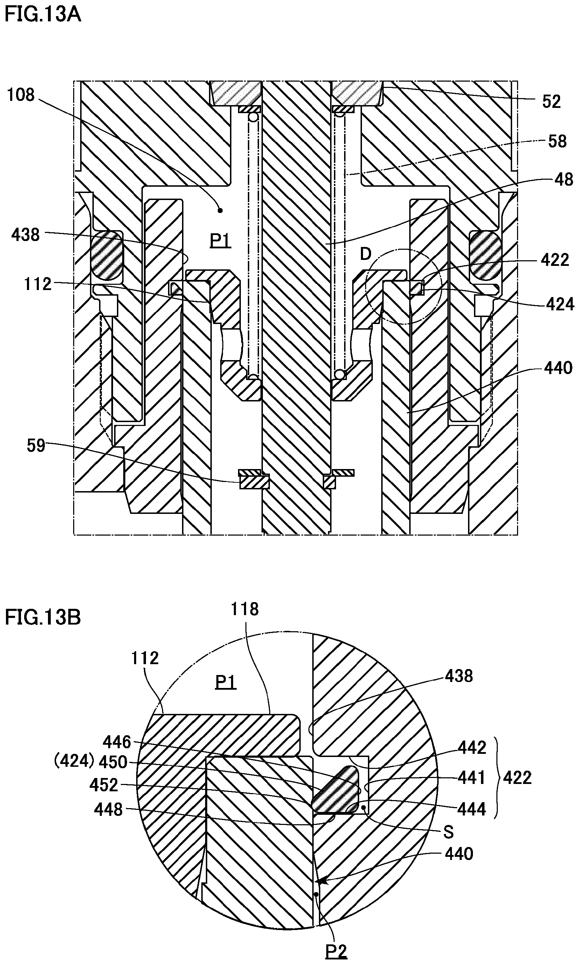

FIGS. 13A and 13B are partially enlarged views illustrating a seal structure according to another modification. FIG. 13A is a partially enlarged cross-sectional view of a seal ring and the structure therearound, and FIG. 13B is an enlarged view of part D in FIG. 13A.

As illustrated in FIG. 13A, in this modification, a seal accommodating portion 422 is not formed on the outer circumferential face of the first valve element 440 but is formed on the inner circumferential face of the guiding hole 438, and a seal ring 424 is fitted therein. As also illustrated in FIG. 13B, the seal accommodating portion 422 is an annular recess having a bottom face 441, a high-pressure side face 442, and a low-pressure side face 444.

The seal ring 424 has a right-angled triangular cross section with R chamfered corners. The seal ring 424 has an outer circumferential face 446, which is a flat face, and a lower face 448, which is perpendicular to the outer circumferential face 446 and in contact with the low-pressure side face 444 of the seal accommodating portion 422. The seal ring 424 has an upper face 450, which is an inclined face (tapered face). The corner between the upper face 450 and the lower face 448 constitutes an inner circumferential face 452 of the seal ring 424. When the first valve element 440 slides along the guiding hole 438, the outer circumferential face of the first valve element 440 slides in close contact with the inner circumferential face 452 of the seal ring 424, which achieves a high sealing property. A space S is formed between the bottom face 441 of the seal accommodating portion 422 and the outer circumferential face 446 of the seal ring 424 (between the bottom face 441 and a face of the seal ring 424 facing each other) .

In this structure as well, the contact area of the seal ring 424 in contact with the outer circumferential face of the first valve element 440 is smaller than the contact area thereof with the low-pressure side face 444 of the seal accommodating portion 422. Thus, as compared with the case of an O ring or the like, the sliding area of the seal ring 424 and the first valve element 440 relative to each other can be made smaller, and the sliding resistance of first valve element 440 can be reduced.

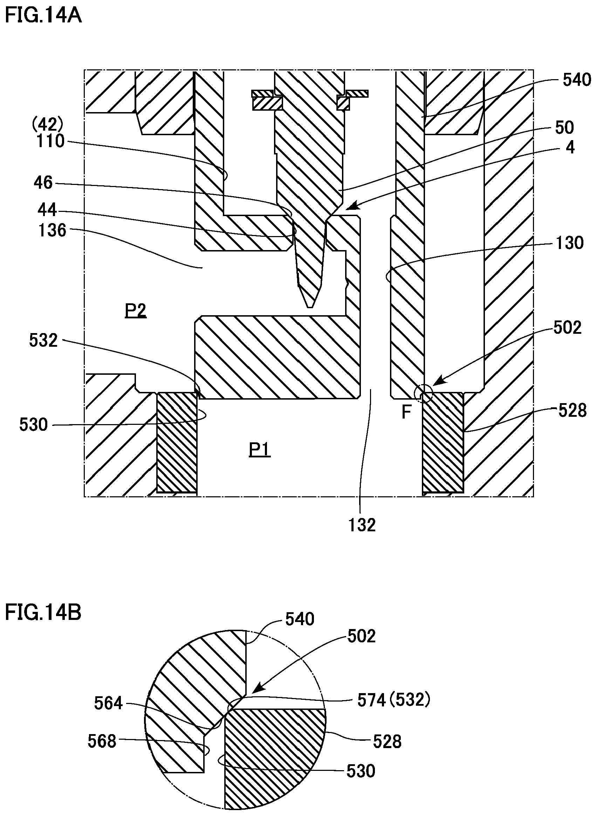

FIGS. 14A and 14B are partially enlarged views illustrating a structure of the first valve according to another modification. FIG. 14A is a partially enlarged cross-sectional view of a first valve and the structure therearound, and FIG. 14B is an enlarged view of part F in FIG. 14A.

As illustrated in FIG. 14A, in this modification, the touching and leaving structure of a first valve element 540 and a valve seat forming member 528 of a first valve 502 is different from that in the embodiment. As also illustrated in FIG. 14B, an upper end opening of the valve seat forming member 528 is an edge portion 574, which constitutes a first valve seat 532. In addition, a leading end of the first valve element 540 has a tapered face 564 and a straight portion 568. The straight portion 568 is parallel to the axis of the first valve element 540.

Specifically, the structure of the first valve 502 for opening and closing thereof includes an insertion and removal structure in which the straight portion 568 moves coaxially into and out of the first valve hole 530 and a touching and leaving structure in which the tapered face 564 touches and leaves the edge portion 574 in a state in which the straight portion 568 is inserted in the first valve hole 530. As a result, a minute clearance is formed between the leading end of the first valve element 540 and the first valve hole 530 in the state in which the first valve 502 is closed or slightly open.

Thus, in a manner similar to the embodiment, a decrease in the pressure receiving area of the first valve element 540 immediately after the first valve 502 is opened can be suppressed. As a result, the load in the valve closing direction applied to the first valve element 540 can be made smaller, and the load on the motor can be reduced.

Although not illustrated in this modification, rubber may be baked on at least the tapered face 564 of the first valve element 540. Alternatively, rubber may be baked on at least the edge portion 574 and around the edge portion 574 of the valve seat forming member 528. This can increase the durability of the first valve seat 532 and improve the sealing property of the first valve 502.

### [Other modifications]

While examples of the cross-sectional shapes of the seal rings have been presented in the embodiment and modifications, polygonal cross-sectional shapes other than those mentioned above may be used. Note that a seal ring is fitted in an annular recess formed on one of the outer circumferential face of the valve element and the inner circumferential face of the guiding hole in such a manner that the contact area between the seal ring and the other of the outer circumferential face of the valve element and the inner circumferential face of the guiding hole is smaller than the contact area between the seal ring and the low-pressure side face of the seal accommodating portion (recess). The pressure difference may make the contact area between the seal ring and the other of the outer circumferential face of the valve element and the inner circumferential face of the guiding hole is smaller than the contact area between the seal ring and the low-pressure side face of the recess.

While an example of a two-step tapered structure of the first valve hole 30 has been presented in the embodiment, the first valve hole 30 may have a one-step tapered structure including a straight portion. Specifically, a structure including the first tapered face 164 illustrated in FIG. 4B but not including the second tapered face 166 may be used.

An example of a combination valve coaxially including a plurality of valves (the first valve and the second valve) has been presented in the embodiment. In a modification, a motor operated valve including a single valve may be used. In this case as well, a seal ring is fitted in an annular recess formed on one of the outer circumferential face of the valve element and the inner circumferential face of the guiding hole in such a manner that the contact area between the seal ring and the other of the outer circumferential face of the valve element and the inner circumferential face of the guiding hole is smaller than the contact area between the seal ring and the low-pressure side face of the seal accommodating portion (recess).

While an example of the spring 58 as a biasing member for biasing the first valve element 40 in the valve closing direction has been presented in the embodiment, the biasing member may be an elastic member such as rubber.

In the embodiment, the stator includes a yoke with pole teeth. In a modification, a stator including a laminated core, or the like may be used.

While the motor operated valve is an expansion valve in the embodiment, the motor operated valve may be any control valve such as an on-off valve or an electromagnetic valve without an expanding function. In addition, while an example of a motor as the actuator has been presented in the embodiment, a solenoid or other actuators may be used.

While the motor operated valve of the embodiment is suitably applicable to a refrigeration cycle using an alternative for chlorofluorocarbon (HFC-134a) or the like as the refrigerant, the motor operated valve can also be applied to a refrigeration cycle using a refrigerant with high working pressure, such as carbon dioxide. In this case, an external heat exchanger such as a gas cooler is provided instead of the condenser in the refrigeration cycle.

While an example in which the motor operated valve is applied to a refrigeration cycle in an automotive air conditioner has been presented in the embodiment, the motor operated valve can also be applied to an air conditioner including a motor operated expansion valve other than those for vehicles. Furthermore, the motor operated valve may be a motor operated valve for controlling a flow of fluid other than refrigerant in devices such as a water heater or a hydraulic controller.

## Claims

1. A control valve (1) comprising:
a body (10) including an inlet port (18) through which fluid is introduced, an outlet port (20) through which the fluid is delivered, a valve hole (30, 530) through which the inlet port (18) and the outlet port (20) communicate with each other, and a valve seat (32) located in the valve hole (30, 530);
a valve element (40, 540) that touches and leave the valve seat (32) to close and open a valve section; a spring (58) that biases the valve element (40, 540) in a valve closing direction; and
an actuator (8) that drives the valve element (40, 540) in opening and closing directions of the valve section, wherein
a rubber (162) is provided on at least one of a face of the valve element (40, 540) and a face of the valve seat (32, 532) that come in contact with each other.

2. The control valve (1) according to claim 1, wherein
the rubber (162) is provided on an inner circumferential face of the valve hole (30, 530),
and
the rubber (162) has a thick portion at a position of the valve seat (32, 532).

3. The control valve (1) according to claim 2, wherein the valve seat (32, 532) has a tapered face (164) formed of the rubber (162).

4. The control valve (1) according to any one of claims 1 to 3, wherein
a valve seat forming member (28, 528) with the rubber (162) thereon is mounted on the body (10) and functions as the valve seat (32, 532).

5. The control valve (1) according to any one of claims 1 to 4, wherein
the rubber (162) is baked on the face of the valve element (40, 540) or the face of the valve seat (32, 532).

6. The control valve (1) according to any one of claims 1 to 5, further comprising:
a back pressure chamber (108) on a side opposite the valve hole (30, 530) with respect to the valve element (40, 540), wherein
a communication passage (130, 110, 116) through which an upstream side of the valve seat (32) and the back pressure chamber (108) communicate with each other at least partially cancels fluid pressure acting on the valve element (40, 540).

7. The control valve (1) according to any one of claims 1 to 6, further comprising:
an actuating rod (48) that transmits an axial driving force from the actuator (8);
and
an operably coupling mechanism that operably couples the actuating rod (48) and the valve element (40, 540) to each other so that the actuating rod (48) and the valve element (40, 540) are movable integrally with each other.

8. The control valve (1) according to claim 7, wherein
the control valve is a motor operated valve, and comprises:
the body (10) including a guiding hole (38) coaxially arranged with the valve hole (30, 530);
the valve element (40, 540) that is slidably supported in the guiding hole (38), and touches and leaves the valve seat (32);
a motor (8), as the actuator (8), including a rotor (60) for driving the valve element (40, 540); and
a feed screw mechanism (90) that converts rotational movement of the rotor (60) into translational movement of the actuating rod (48).

9. The control valve (1) according to claim 8, comprising:
the body (10) including a first valve hole (30, 530) as the valve hole (30, 530);
a first valve element (40, 540), as the valve element (40, 540), that includes an inflow port (132) communicating with the inlet port (18), an outflow port (136) communicating with the outlet port (20), and a second valve hole (44) arranged in a passage connecting the inflow port (132) with the outflow port (136) coaxially with the first valve hole (30, 530), that is slidably supported in the guiding hole (38), and that touches and leaves the valve seat (32) to close and open a first valve (2); and
a second valve element (50) that is integrated with the actuating rod (48), coaxially inserted in the first valve element (40, 540), and moves toward and away from the second valve hole (44) to close an open a second valve (4), wherein
the operably coupling mechanism operably couples the first valve element (40, 540) and the second valve element (50) to each other so that the first valve element (40, 540) and the second valve element (50) are movable integrally with each other when an amount by which the second valve element (50) is lifted from the second valve hole (44) has become a predetermined amount or larger.

10. The control valve (1) according to any one of claims 1 to 9, wherein
in a specific operation state of the control valve (1), a load in the valve closing direction applied to the valve element (40, 540) is not applied by the actuator (8) but is applied by the spring (58).

11. The control valve (1) according to any one of claims 1 to 10, wherein
the control valve (1) is arranged in a refrigeration cycle and controls a flow of refrigerant.
